# EUROPÄISCHE PATENTANMELDUNG

(11) **EP 1 107 252 A2**
(43) Veröffentlichungstag der Anmeldung: **13.06.2001**
(21) Anmeldenummer: 00124984.6
(22) Anmeldetag: 16.11.2000
(51) Int. Cl.: G11B 27/00, G11B 31/00, G11B 17/22, H04B 1/20

(54) **System, Empfangseinrichtung und Verfahren zum Wiedergeben von Audio und Videodaten**

(30) Priorität: 01.12.1999 DE 19957768
(71) Anmelder: Bayerische Motoren Werke Aktiengesellschaft, 80809 München (DE)
(72) Erfinder: Wiesmeier, Christian, 81929 München (DE); Schneider, Steffen, 81737 München (DE)

(57) **Zusammenfassung**

Die Erfindung betrifft ein System, eine Empfangsvorrichtung und ein Verfahren zum Wiedergeben von Audio- und Videodaten. Das System umfasst eine ortsfeste Abgabeeinheit zum Aussenden von angeforderten Audio- und Videodaten mit einer ersten Kommunikationseinheit, und eine mobile Empfangseinrichtung zum Empfangen der ausgesendeten Audio- und Viedeodaten mit einer zweiten Kommunikationseinheit, einem Zwischenspeicher, in dem die übertragenen Audio- oder Videodaten aufgezeichnet werden, und einem Abspielgerät, welches die in dem Zwischenspeicher aufgenommenen Daten wiedergeben kann, wobei mit der zweiten Kommunikationseinheit der mobilen Empfangseinrichtung eine Verbindung unter Verwendung einer Funkstrecke zu der ersten Kommunikationseinheit der ortsfesten Abgabeeinheit aufbaubar und die ortsfeste Abgabeeinheit zum Übertragen von angeforderten Audio- und Videodaten veranlaßbar ist.

## Beschreibung

Die Erfindung betrifft ein System, eine Empfangseinrichtung und ein Verfahren zum Wiedergeben von Audio- und Videodaten.

Bei der Wiedergabe von Audiodaten in Form von Musik bei einem Kraftfahrzeug ist es bekannt, CD-Wechsler (CD = Compact Disc) zu verwenden, so daß während einer Fahrt mehrere CD's nacheinander angehört werden können, ohne daß eine CD ausgewechselt werden muß. Bei einem Fassungsvermögen von bis zu 10 CD's in einem CD-Wechsler sind somit Abspielzeiten von bis zu 12 Stunden erreichbar.

Nachteilig wirkt sich jedoch der erhöhte Platzbedarf und der relativ hohe Grundpreis für solche Vorrichtungen aus.

Für gespeicherte Videoinformationen ist eine solche mobile Wechselvorrichtung nicht bekannt.

Aufgabe der vorliegenden Erfindung ist es, ein System, eine Empfangseinrichtung und ein Verfahren zum Wiedergeben von Audio- und Videodaten, insbesondere in einer mobilen Einrichtung, anzugeben, bei dem bzw. der keine Vorrathaltung notwendig ist.

Diese Aufgabe wird durch die Merkmale der Ansprüche 1, 9 und 12 gelöst.

Ein Kerngedanke der vorliegenden Erfindung ist es, gewünschte Audio- und/oder Videodaten ortsfest bereitzuhalten. Auf Anforderung können diese Audio- und Videodaten dann unter Zuhilfenahme einer Funkstrecke von der ortsfesten Abgabeeinheit an eine mobile Empfangseinrichtung übertragen und dort in einem Zwischenspeicher abgelegt werden. Je höher dabei die Übertragungsrate ist, desto kürzer ist die gesamte Übertragungszeit. Unter Rückgriff auf die im Zwischenspeicher abgelegten Daten kann dann ein übliches Abspielgerät zur Wiedergabe verwendet werden.

Um die Erfindung durchführen zu können, ist es notwendig, zunächst von der mobilen Empfangseinrichtung aus gewünschte Daten anzufordern, wozu ein entsprechender Anforderungsbefehl an die ortsfeste Abgabeeinheit ergehen muß. Die ortsfeste Abgabeeinheit wiederum gibt in Reaktion auf diese Abgabeanforderung die gewünschten Audio- und/oder Videodaten aus. Um die Mobilität der Empfangseinrichtung nicht zu beeinträchtigen, sollte bei der Übermittlung der Daten von der ortsfesten Abgabeeinheit an die mobile Empfangseinrichtung zumindest eine Funkstrecke verwendet werden. In der mobilen Empfangseinrichtung werden die empfangenen Daten dann in einem Speicher aufgezeichnet und können je nach Wunsch des Bedieners über das Abspielgerät wiedergegeben werden.

Die vorliegende Erfindung läßt sich auf jegliche Übermittlung von Audio- und Videodaten anwenden.

Von Vorteil dabei ist es, wenn als ortsfeste Abgabeeinheit eine Computereinheit mit einer Speichereinrichtung verwendet wird, auf der die Audio- und Videodaten aufgezeichnet sind. Solch eine Computereinheit kann mittels eines Modems oder eines Interfaces mit einer Kommunikationseinrichtung verbunden sein, bei der es sich beispielsweise um ein Telefon handelt, und unter Ausnutzung dieser Verbindung Daten übertragen. Auf der Seite der Empfangseinrichtung ist dann ein mobiles Telefon vorgesehen, das hier als Kommunikationseinrichtung dient. Um eine schnelle Übermittlung der Audio- und Videodaten vornehmen zu können, ist eine Übermittlung in komprimierter Form von Vorteil. Dazu sollten die Audio- oder Videodaten auf der Seite der Abgabeeinheit in komprimierter Form vorliegen oder komprimiert werden. Auf der Seite der Empfangseinrichtung müssten diese Daten wieder dekomprimiert werden. Als Zwischenspeicher läßt sich jede beschreibbare Speichereinheit verwenden. Seit einiger Zeit ist es auch bekannt, Daten auf austauschbare Chipkarten abzuspeichern, die dann in ein Lese- oder Abspielgerät eingeführt werden.

Um die ortsfeste Abgabeeinheit nicht ständig in Betrieb halten zu müssen, ist es ferner von Vorteil, diese Abgabeeinheit weckbar auszubilden, so daß erst bei einem Anforderungssignal die Abgabeeinheit aktiviert wird.

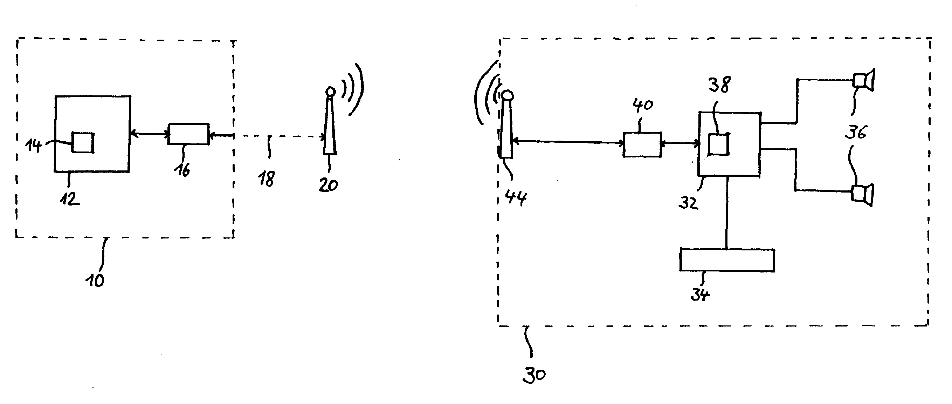

Die vorliegende Erfindung wird anhand eines besonders bevorzugten Ausführungsbeispiels und mit Bezugnahme auf die einzige Zeichnung erläutert. Die einzige Zeichnung stellt ein schematisches Blockdiagramm dar.

Als besonders interessantes Einsatzgebiet ist die Übermittlung von Audio- und Videodaten an Kraftfahrzeuge zu nennen. Aber auch andere Anwendungsbereiche, beispielsweise für andere Fortbewegungsmittel oder luxurios weitergebildete Handys, sind vorstellbar.

Die vorliegende Erfindung wird anhand eines Anwendungsbeispiels bei einem Fahrzeug näher erläutert. Ein (nicht weiter dargestelltes) Fahrzeug enthält eine mobile Empfangseinrichtung 30, die eine Zentraleinheit 32 umfasst, in der ein wiederum beschreibbarer Zwischenspeicher 38 enthalten ist. Die Zentraleinheit 32 ist mit einer Eingabeeinrichtung 34 verbunden, über die ein Bediener Befehle an die Zentraleinheit 32 übermitteln kann. Die Zentraleinheit 32 umfaßt ferner ein (nicht näher dargestelltes) Autoradio, welches mit zwei Lautsprechern 36 zum Abspielen von Audiosignalen dient.

Die Zentraleinheit 32 ist auf der anderen Seite mit einer mobilen Telefoneinheit 42 verbunden, die Signale über eine mit ihr verbundene Antenne 44 aussenden und empfangen kann. Derartige mobile Telefone sind in Fahrzeugen bereits häufig enthalten.

Als Gegenstelle ist eine ortsfeste Abgabeeinheit 10 in Form eines Personal-Computers (PC) 12 vorgesehen, der ebenfalls ein Speichermedium 14 enthält. Auf diesem Speichermedium sind Audiodaten in komprimierter Form, beispielsweise im MP3-Format gespeichert. Der PC ist mit einem Modem 16 oder alternativ einem digitalen Adapter (z.B. ISDN-Karte) verbunden, über das bzw. den er sich in das öffentliche Telefonnetz einwählen kann. Das öffentliche Telefonnetz ist hier durch die Bezugsziffer 18 angedeutet. Das öffentliche Telefonnetz erlaubt über verschiedene Sende- und Empfangseinrichtungen 20 eine Kommunikation mit Mobiltelefonen.

Nachfolgend wird die Funktionsweise der beschriebenen Vorrichtung erläutert. Ein Bediener gibt über die Eingabeeinrichtung 34 verschiedene Musikwünsche an die Zentraleinheit 32 ein. Die Zentraleinheit 32 erzeugt ein Anforderungssignal, welches über das Modem 40 an die mobile Telefoneinheit 42 weitergegeben und von dieser über die Antenne 44 abgestrahlt wird. Das Anforderungssignal wird von der Empfangseinrichtung 20 empfangen und über das öffentliche Fernsprechnetz an das Modem 16 weitergegeben, welches den Personal-Computer 12 zunächst aufweckt, d. h. aktiviert. Danach wird dem Personal-Computer 12 das Anforderungssignal übermittelt, der daraufhin aus der Speichereinheit 14 die komprimierten Daten für dazugehörigen Musiktitel auswählt und über das Modem 16, das öffentliche Fernsprechnetz 18 und die Sendeeinheit 20 an die mobile Empfangseinrichtung 30 zurückübermittelt. Die Antenne 44 der mobilen Empfangseinrichtung 30 empfängt diese Signale und gibt sie über die mobile Telefoneinrichtung 42 und das Modem 40 an die Zentraleinheit 32 ab, wo sie decodiert und in dem Zwischenspeicher 38 abgespeichert werden. Je nach Bedienwunsch können dann aus dem Zwischenspeicher 38 die darin gespeicherten Musiktitel über die Audioanlage und die Lautsprecher 36 wiedergegeben werden.

Alternativ zu der dargestellten Ausführungsform können die von der mobilen Empfangseinheit empfangenen Daten auch auf einer Chipkarte gespeichert werden. Die Chipkarte wiederum kann in ein separates bekanntes Audiogerät eingeführt und von diesem abgespielt werden. Das oben genannte Verfahren ist bereits heute prinzipiell möglich. Die Information von etwa 100 Musik-CD's mit einer Spieldauer von jeweils etwa 70 Minuten benötigen einen Speicherplatz von etwa 7 Gigabyte. Speichermedium mit einer solchen Speicherkapazität stehen bereits zur Verfügung. Im übrigen ist beispielsweise auch das bekannte Windows 98 (eingetragenes Warenzeichen) Betriebssystem über ein externes Modem weckbar. Darüber hinaus werden bereits heute Mobilfunkgeräte erprobt, die über eine Übertragungsgeschwindigkeit von bis zu 2 Mbits/s verfügen. Bei den Übertragungseinrichtungen im Fahrzeug kann man auf optische Busse zurückgreifen, mit denen Übertragungsraten von bis zu 22 Mbit/s durchgeführt werden können. Insgesamt kann man daher davon ausgehen, daß in Zukunft eine CD in etwa 30 Sekunden geladen werden kann, so daß sich die dafür anfallenden Übermittlungspreise in Grenzen halten.

Eine entsprechende Übermittlung ist natürlich auch für Videodaten vorstellbar.

Insgesamt ist mit der vorliegenden Erfindung eine Einrichtung geschaffen, mit der sich in einer ortsfesten Abgabeeinheit Daten in nahezu unbegrenzter Menge bereitstellen lassen. Diese Daten können dann erfindungsgemäß zukünftig an fast jedem Punkt der Welt abgerufen werden, so daß keine großen Speichermedien mehr in mobilen Einrichtungen zur Verfügung gestellt werden müssen.

## Patentansprüche

1. System zum Wiedergeben von Audio- und Videodaten umfassend
- eine ortsfeste Abgabeeinheit zum Aussenden von angeforderten Audio- und Videodaten mit einer ersten Kommunikationseinheit, und
- eine mobile Empfangseinrichtung zum Empfangen der ausgesendeten Audio- und Viedeodaten mit einer zweiten Kommunikationseinheit, einem Zwischenspeicher, in dem die übertragenen Audio- oder Videodaten aufgezeichnet werden, um sie in einem Abspielgerät, welches die in dem Zwischenspeicher aufgenommenen Daten wiedergeben kann, abzuspielen, wobei mit der zweiten Kommunikationseinheit der mobilen Empfangseinrichtung eine Verbindung unter Verwendung einer Funkstrecke zu der ersten Kommunikationseinheit der ortsfesten Abgabeeinheit aufbaubar und die ortsfeste Abgabeeinheit zum Übertragen von angeforderten Audio- und Videodaten veranlaßbar ist.

2. System nach Anspruch 1,
dadurch gekennzeichnet,
daß es sich bei der ortsfesten Abgabeeinheit um eine Computereinheit mit einer Speichereinrichtung, auf der die Audio- und Videodaten gespeichert sind, handelt, und die Computereinheit mittels eines Modems oder Interfaces mit der ersten Kommunikationseinrichtung verbunden ist.

3. System nach Anspruch 2,
dadurch gekennzeichnet,
daß es sich bei der Kommunikationseinheit um ein Telefon handelt.

4. System nach einem der vorhergehenden Ansprüchen,
dadurch gekennzeichnet,
daß die Audio- und Videodaten in komprimierter Form vorliegen.

5. System nach einem der vorhergehenden Ansprüchen,
dadurch gekennzeichnet,
daß als Zwischenspeicher eine Chipkarte oder eine andere beschreibbare oder wiederbeschreibbare Speichereinheit verwendet ist.

6. System nach einem der vorhergehenden Ansprüchen,
dadurch gekennzeichnet,
daß die mobile Empfangseinrichtung als Kommunikationseinrichtung ein Mobiltelefon umfaßt.

7. System nach einem der vorhergehenden Ansprüchen,
dadurch gekennzeichnet,
daß die Kommunikationseinheit der Empfangseinrichtung über einen fahrzeuginternen Datenbus, insbesondere einen optischen Bus, mit dem Zwischenspeicher verbunden ist.

8. System nach einem der vorhergehenden Ansprüchen,
dadurch gekennzeichnet,
daß die Abgabeeinheit weckbar ausgebildet ist.

9. Mobile Empfangseinrichtung zum wiedergeben von Audio- und Viedeodaten,
dadurch gekennzeichnet,
daß sie nach einem der Ansprüche 1 bis 8 ausgebildet ist.

10. Mobile Empfangseinrichtung nach Anspruch 9,
dadurch gekennzeichnet,
daß die Empfangseinrichtung in ein Kraftfahrzeug integriert ist.

11. Mobile Empfangseinrichtung nach Anspruch 9 oder 10,
dadurch gekennzeichnet,
daß der Kommunikationsteil der Empfangseinrichtung ein Mobilfunktelefon umfaßt und mit diesem über ein Modem oder ein Interface verbunden ist.

12. Verfahren zur Widergabe von Audio- und Videodaten umfassend die Schritte:
- Herstellen einer Funkverbindung zwischen einer mobilen Empfangseinrichtung zum Wiedergeben von Audio- und Videodaten und einer ortsfesten Abgabeeinheit, in der anzufordernde Video- oder Audiodaten abgespeichert sind,
- Anfordern von bestimmten Audio- und Videodaten,
- Überspielen der angeforderten Audio- und Videodaten von der ortsfesten Abgabeeinheit auf die mobile Empfangseinrichtung unter Verwendung einer Funkstrecke,
- Zwischenspeichern der überspielten Audio- und Videodaten in der mobilen Empfangseinrichtung, um sie über ein Abspielgerät wiederzugeben.

13. Verfahren nach Anspruch 12,
dadurch gekennzeichnet,
daß die Audio- und Videodaten auf Seiten der ortsfesten Abgabeeinheit komprimiert sind oder werden und auf Seiten des mobilen Systems dekomprimiert werden.

14. Verfahren nach einem der Ansprüche 12 oder 13,
dadurch gekennzeichnet,
daß die Audio- und Videodaten empfangseinrichtungsseitig auf einer Chipkarte zwischengespeichert werden, welche zum Wiedergeben der Audio- und Videodaten in das Abspielgerät eingeführt wird.

15. Verfahren nach einem der Ansprüche 12 bis 14,
dadurch gekennzeichnet,
daß die ortsfeste Abgabeeinheit zum Überspielen der Video- und Audiodaten geweckt wird.
